# EUROPÄISCHE PATENTSCHRIFT

(11) **EP 2 744 592 B1**
(45) Veröffentlichungstag und Bekanntmachung des Hinweises auf die Patenterteilung: **18.03.2015**
(21) Anmeldenummer: 12743969.3
(22) Anmeldetag: 02.08.2012
(51) Int. Cl.: B01J 20/20, B01J 20/04, B01J 20/28, B01J 20/32, B01J 20/02, C02F 1/28, G21F 9/12, C02F 101/00

(54) **AUF EINEM TRÄGER PRÄZIPITIERTES ADSORBENS, VERFAHREN ZU SEINER HERSTELLUNG UND SEINE VERWENDUNG**
ADSORBENT PRECIPITATED ON A CARRIER, METHOD FOR PRODUCING SAID ADSORBENT, AND USE OF SAID ADSORBENT
ADSORBANT PRÉCIPITÉ SUR UN SUPPORT, PROCÉDÉ POUR LA PRODUCTION DUDIT ADSORBANT ET UTILISATION DUDIT ADSORBANT

(30) Priorität: 17.08.2011 DE 102011081080
(43) Veröffentlichungstag der Anmeldung: 25.06.2014
(73) Patentinhaber: Blücher GmbH, 40699 Erkrath (DE)
(72) Erfinder: SCHRAGE, Christian, 01097 Dresden (DE); GIEBELHAUSEN, Jann-Michael, 14712 Rathenow (DE); FICHTNER, Sven, 14727 Premnitz (DE)
(74) Vertreter: Von Rohr Patentanwälte Partnerschaft mbB
(86) Internationale Anmeldenummer: PCT/EP2012/065166
(87) Internationale Veröffentlichungsnummer: WO 2013/023932

(56) Entgegenhaltungen:
- EP-A1- 0 311 244
- EP-A1- 0 575 612
- WO-A1-03/072498
- JP-A- 2 207 839
- US-B1- 6 190 562
- MIAO FENG ET AL: "Synthesis and characterization of a new activated carbon supported ammonium molybdophosphate composite and its cesium-selective adsorption properties", RADIOCHIMICA ACTA, OLDENBOURG WISSENSCHAFTSVERLAG GMBH, MUNICH - DE, Bd. 98, Nr. 1, 1. Januar 2010 (2010-01-01) , Seiten 39-44, XP008156946, ISSN: 0033-8230, DOI: 10.1524/RACT.2010.1684
- LI WANG ET AL: "Supporting of Potassium Copper Hexacyanoferrate on Porous Activated Carbon Substrate for Cesium Separation", SEPARATION SCIENCE AND TECHNOLOGY, Bd. 44, Nr. 16, 30. November 2009 (2009-11-30), Seiten 4023-4035, XP55040136, ISSN: 0149-6395, DOI: 10.1080/01496390903183253
- KIKUO TERADA ET AL: "Silica gel as a support for inorganic ion- exchangers for the determination of caesium-137 in natural waters", TALANTA, Bd. 17, Nr. 10, 1. Oktober 1970 (1970-10-01), Seiten 955-963, XP55040653, ISSN: 0039-9140, DOI: 10.1016/0039-9140(70)80138-2
- KRISHNA P S R: "EFFECT OF POWDER SYNTHESIS PROCEDURE ON CALCIUM SITE OCCUPANCIES IN BARIUM CALCIUM TITANATE: A RIETVELD ANALYSIS", APPLIED PHYSICS LETTERS, AIP, AMERICAN INSTITUTE OF PHYSICS, MELVILLE, NY, US, Bd. 62, Nr. 3, 18. Januar 1993 (1993-01-18), Seiten 231-233, XP000334797, ISSN: 0003-6951, DOI: 10.1063/1.108974

## Beschreibung

Die Erfindung betrifft ein Verfahren zur Herstellung eines auf einem Träger präzipitierten Adsorbens, ein durch das Verfahren erhältliches, auf einem Träger präzipitiertes Adsorbens und seine Verwendung.

Zur Adsorption von Cs⁺, insbesondere von radiotoxischem ¹³⁷Cs⁺, ist es bekannt, Präzipitate von Hexacyanoferrat(II) und von Hexacyanoferrat(III) einzusetzen. Die Präzipitate lassen sich durch eine Fällungsreaktion der entsprechenden Ausgangsverbindungen im wässrigen System synthetisieren. Jedoch fallen die Präzipitate als feinkristalline oder kolloidale Niederschläge an. Folglich treten beim Einsatz der feinkristallinen oder kolloidalen Präzipitate als Festbettschüttung hohe Druckverluste auf, wodurch entweder die Durchflussrate des mit Cs⁺ belasteten Wassers gesenkt oder die Abmessung der eingesetzten Adsorbersäulen begrenzt wird.

DE 40 21 046 A1 beschreibt ein für Cs⁺ selektives Ionenaustauschermaterial aus Di-Ammonium-Kupfer-Hexacyanoferrat, das auf einem Träger abgeschieden wird, der aus einem kugelförmigen porösen Anionenaustauscher auf Polystyrol-Basis besteht, wobei quaternäre Ammoniumgruppen als Anionenaustauschergruppen fungieren. Die quaternären Ammoniumgruppen dienen zu Bindung des auf dem Träger abgeschiedenen Di-Ammonium-Kupfer-Hexacyanoferrats. Die Quellfähigkeit des als Träger eingesetzten Ionenaustauschermaterials beeinflusst jedoch die Dimensionsstabilität eines als Filterbett eingesetzten Ionenaustauschermaterials nachteilig, weil als Folge der Quellung eine Volumenvergrößerung des Filterbetts auftritt. Dadurch kommt es in einer geschlossenen Adsorptionsvorrichtung, z.B. in einer Adsorbersäule, zum Aufbau von mechanischen Spannungen, wodurch die Adsorptionsvorrichtung beschädigt werden kann. Ferner ist im gequollenen Zustand des Ionenaustauscher-Trägers dessen Abriebhärte vermindert, wodurch es zu einem Austrag von Trägermaterial mit dem darauf abgeschiedenen Cs⁺ aus einer Adsorptionsvorrichtung kommen kann, was insbesondere bei der Abtrennung von radiotoxischem ¹³⁷Cs⁺ unerwünscht ist. Der quaternäre Ammoniumgruppen aufweisende Träger ist ein stark basischer Anionenaustauscher, so dass beim Einsatz des Trägers im sauren Milieu Säure/Basen - Reaktionen auftreten, deren Wärmeentwicklung die Cs⁺- Adsorptionskapazität des auf dem Träger abgeschiedenen Adsorbens verringern können.

US 4,448,711 beschreibt das Imprägnieren eines Zeolithen mit Metallionen, die in der Lage sind, in Wasser schwerlösliche Ferrocyanide in den Poren eines Zeolithen durch Ionenaustausch zu adsorbieren. Nach der Adsorption der vorstehend genannten Metallionen in den Poren des Zeolithen wird der Zeolith mit einer wässrigen Lösung von löslichem Ferrocyanid behandelt, wodurch auf dem Zeolithen ein Metallferrocyanid der vorstehend genannten Metallionen gebildet wird. Danach wird der Zeolith einer Alterungsbehandlung unterzogen. Zur Alterungsbehandlung wird der Zeolith in Wasser oder an Luft auf 100 °C erhitzt, um die Kristallisation der Metallferroycyanid-Verbindung zu fördern. Alternativ wird der Zeolith in eine vorzugsweise 80-100 °C heiße hochkonzentrierte wässrige Lösung eines neutralen Alkali-Salzes getaucht, um nicht umgesetzte Metallionen zu entfernen und die Metallferrocyanid-Verbindung in den Poren des Zeolithen zu altern. Die erforderliche Alterungsbehandlung macht die Herstellung des auf dem Zeolith-Träger abgeschiedenen Metallferrocyanids aufwendig. Zudem sind nicht alle Zeolithe, d.h. Verbindungen vom Typ M₂/_{z}O·Al₂O₃·xSiO₂·yH₂O (M = ein- oder mehrwertiges Metall, z = Wertigkeit, x = 1,8 bis 12, y = 0 bis ca. 8) in saurer und in alkalischer Lösung stabil, wodurch das pH-Spektrum von Cs⁺-haltigen Lösungen, die mit dem auf dem Zeolithen abgeschiedenen Adsorbens behandelt werden können, eingeengt wird. Ferner fallen Zeolithe in der Regel als feinteilige Pulver an. Wird das Zeolith-Pulver als Festbettschüttung in einer Adsorbersäule eingesetzt, kommt es beim Betrieb der Adsorbersäule zu erheblichen Druckverlusten. Zwar könnte man zur Verringerung der Druckverluste aus dem Zeolith-Pulver ein Zeolith-Granulat herstellen. Dadurch würde die Herstellung des Zeolith-basierten Trägers noch aufwendiger werden.

Darüber hinaus betrifft die JP 2 207 839 A die Ausrüstung einer Aktivkohle mit einer Hexacyanoferrat-Komponente.

Weiterhin betrifft die wissenschaftliche Publikation gemäß Terada et al., "Silical gel as a support for inorganic ion-exchangers for the determination of caesium-137 in natural waters", Talanta, 1970, Vol. 17, Seiten 955 bis 963, die Herstellung eines Kieselgels *(silica gel)* unter Verwendung von Ammonium-Molybdophosphat sowie Kalium- oder Ammoniumhexacyanocobaltferrat.

Schließlich betrifft die wissenschaftliche Publikation gemäß Wang et al., "Supporting of Potassium Copper Hexacyano-ferrate on Porous Acitvated Carbon Substrate for Cesiumseparation", Separation Science and Technology 44, 2009, Seiten 4023 bis 4035*,* ein Cäsium-selektives Material auf Basis von Aktivkohle, welche mit Kalium-Kupfer-Hexacyanoferrat ausgerüstet ist.

Daher stellt sich die vorliegende Erfindung die Aufgabe, ein auf einem Träger adsorbiertes Adsorbens, insbesondere ein Cs⁺- Adsorbens, zur Verfügung zu stellen, das
- eine hohe mechanische und chemische Stabilität aufweist und
- beim Einsatz in einer Adsorptionsvorrichtung einen möglichst geringen Druckverlust bewirkt.

Diese Aufgabe wird gelöst durch das erfindungsgemäße, in den entsprechenden Verfahrenspatentansprüchen beschriebene Verfahren sowie das auf einem Träger präzipitierte Adsorbens, das durch das erfindungsgemäße Verfahren erhältlich ist. Bei dem gemäß dem erfindungsgemäßen Verfahren erhältlichen, auf einem Träger präzipitierten Adsorbens besteht der Träger aus einer polymerbasierten kugelförmigen Aktivkohle und das Adsorbens ist ein zur Adsorption eines Metallkations oder einer Mischung von Metallkationen aus einem flüssigen, vorzugsweise wässrigen Medium fähiges anorganisches Präzipitat.

Das gemäß dem erfindungsgemäßen Verfahren erhältliche, auf einem Träger präzipitierte Adsorbens weist eine hohe mechanische Stabilität auf. Die hohe mechanische Stabilität äußert sich
- in einer hohen Druck- bzw. Berstfestigkeit pro Aktivkohlekugel (Gewichtsbelastbarkeit) von mindestens 5 Newton, vorzugsweise von mindestens 10 Newton und im Allgemeinen in einem Bereich von 5 bis 50 Newton, sowie
- in einer Abriebfestigkeit von mindestens 90% gemäß einer von der Anmelderin in Anlehnung an die Methode nach CEFIC (Conseil Europeen des Federations des l'Industrie Chimique, November 1986, Ziffer 1.6 "Mechanische Härte", Seiten 18/19) modifizierten und in EP 1 918 022 A1, Paragraph [0046] beschriebenen Testmethode,
so dass in einer Adsorptionssäule, die mit dem gemäß dem erfindungsgemäßen Verfahren erhältlichen, auf einem Träger präzipitierten Adsorbens betrieben wird, keine Träger-Fragmente und kein Träger-Staub gebildet werden, wodurch der Austrag des am Träger adsorbierten Metallkations bzw. der vom Träger adsorbierten Mischung von Metallkationen unterbunden wird. Dies ist insbesondere bei der Adsorption von radiotoxischen Metallkationen, wie z.B. bei der Adsorption von radiotoxischem ¹³⁷Cs⁺ von Vorteil.

In bevorzugten Ausführungsformen des gemäß dem erfindungsgemäßen Verfahren erhältlichen, auf einem Träger präzipitierten Adsorbens beträgt die Abriebfestigkeit mindestens 90 %, noch bevorzugter mindestens 95 % und ganz besonders bevorzugt 98 %.

Die hohe mechanische Stabilität des gemäß dem erfindungsgemäßen Verfahren erhältlichen, auf einem Träger präzipitierten Adsorbens hat zur Folge, dass beim Betrieb einer Adsorptionschromatographie-Säule, die mit dem gemäß dem erfindungsgemäßen Verfahren erhältlichen, auf einem Träger präzipitierten Adsorbens gefüllt ist, ein Abrieb auftritt, der ca. 1,1 bis 2,5 mal kleiner ist als der Abrieb, der beim Betrieb einer Adsorptionschromatographie-Säule gleicher Abmessungen aufritt, welche mit einem Adsorbens gefüllt ist, dessen Träger eine granulare Aktivkohle ist, die das gleiche anorganische Präzipitat enthält wie das gemäß dem erfindungsgemäßen Verfahren erhältliche Adsorbens, und die aus Körnern besteht, deren mittlerer Durchmesser gleich groß ist wie der Durchmesser der im gemäß dem erfindungsgemäßen Verfahren erhältlichen Adsorbens eingesetzten kugelförmigen polymerbasierten Aktivkohle.

Gleichzeitig weist das gemäß dem erfindungsgemäßen Verfahren erhältliche, auf einem Träger präzipitierte Adsorbens eine hohe chemische Stabilität auf, so dass sich das pH-Spektrum von in Frage kommenden Lösungen des Metallkations, z.B. von Cs⁺-haltigen Lösungen bzw. der Mischung von Metallkationen sowohl weit in den sauren Bereich (bis z.B. pH = 1) als auch weit in den alkalischen Bereich (bis z.B. pH = 12-13) erstreckt, wobei die chemische Stabilität des gemäß dem erfindungsgemäßen Verfahren erhältlichen, auf einem Träger präzipitierten Adsorbens nicht durch den erfindungsgemäß eingesetzten Träger sondern durch die chemische Stabilität des Präzipitats bestimmt wird.

Ferner zeigt das gemäß dem erfindungsgemäßen Verfahren erhältliche, auf einem Träger präzipitierte Adsorbens beim Einsatz in einer Adsorptionsvorrichtung als Folge der Kugelform des Trägers den geringst möglichen Druckverlust bei vergleichbarer Partikelgröße, wobei der Druckverlust auch über lange Filtrationszeiten nicht ansteigt, da die bereits erwähnte hohe mechanische Stabilität der polymerbasierten kugelförmigen Aktivkohle eine Fragmentierung der Kugeln und somit ein Verstopfen der Volumina zwischen den Träger-Kugeln durch Kugelfragmente verhindert. Dies hat zur Folge, dass beim Betrieb einer Adsorptionschromatographie-Säule, die mit dem gemäß dem erfindungsgemäßen Verfahren erhältlichen, auf einem Träger präzipitierten Adsorbens gefüllt ist, ein Druckverlust auftritt, der ca. 1,1 bis 2 mal kleiner ist als der Druckverlust, der beim Betrieb einer Adsorptionschromatographie-Säule gleicher Abmessungen aufritt, welche mit einem Adsorbens gefüllt ist, dessen Träger eine granulare Aktivkohle ist, die das gleiche anorganische Präzipitat enthält wie das gemäß dem erfindungsgemäßen Verfahren erhältliche Adsorbens, und die aus Körnern besteht, deren mittlerer Durchmesser gleich groß ist wie der Durchmesser der im gemäß dem erfindungsgemäßen Verfahren erhältlichen Adsorbens eingesetzten kugelförmigen polymerbasierten Aktivkohle.

Im Rahmen der vorliegenden Erfindung bedeutet der Ausdruck "polymerbasierte kugelförmige Aktivkohle" eine kugelförmige Aktivkohle, zu deren Herstellung ein synthetisches Polymer eingesetzt wird. Bevorzugte synthetische Polymere sind sulfonierte Styrol/Divinylbenzol-Copolymere oder sulfonierte mit Divinylbenzol vernetzte Polystyrole. Die vorstehend genannten synthetischen Polymere und deren Verarbeitung zu einer polymer basierten kugelförmigen Aktivkohle sind in EP 1 918 022 A1 und in DE 101 91 656 B4 beschrieben.

In einer bevorzugten Ausführungsform des gemäß dem erfindungsgemäßen Verfahren erhältlichen, auf einem Träger präzipitierten Adsorbens ist die polymerbasierte kugelförmige Aktivkohle eine poröse Aktivkohle, die Poren mit einem minimalen mittleren Porendurchmesser von mindestens 5 A, vorzugsweise von mindestens 10 A und besonders bevorzugt von mindestens 15 A aufweist. Der mittlere Porendurchmesser dₐᵥₑ lässt sich aus der spezifischen Oberfläche SA und dem, bei vollständig gefüllten Poren, adsorbierten Volumen Vₜₒₜₐₗ gemäß dₐᵥₑ = 4 · Vₜₒₜₐₗ/SA berechnen.

Bei dem gemäß dem erfindungsgemäßen Verfahren erhältlichen, auf einem Träger präzipitierten Adsorbens weist die polymerbasierte kugelförmige Aktivkohle
- ein Gesamtporenvolumen nach Gurvich von mindestens 0,5 cm³/g, wobei mindestens 50 %, bevorzugt mindestens 70 % des Gesamtporenvolumens durch Mikroporen mit einem Porendurchmesser von höchstens 20 Å gebildet sind,
- einen mittleren Porendurchmesser von höchstens 40 Å und
- eine BET-Oberfläche von mindestens 1.000 m²/g
auf.

Die Bestimmung des Gesamtporenvolumens nach Gurvich ist eine dem Fachmann auf dem Gebiet der Adsorptionstechnik bekannte Mess-Methode. Bezüglich weitergehender Einzelheiten der Bestimmung des Gesamtporenvolumens nach Gurvich kann auf L. Gurvich (1915) J. Phys. Chem. Soc. Russ. 47 805, sowie auf S. Lowell et al., Characterization of Porous Solids and Powders: Surface Area Pore Size and Density, Kluwer Academic Publishers, Article Technology Series, Seiten 111 ff. verwiesen werden.

Im Rahmen der vorliegenden Erfindung bedeutet der Begriff "Mikroporen" Poren mit einem Durchmesser von bis zu 20 Å.

Die Bestimmung des mittleren Porendurchmessers erfolgt auf Basis der jeweiligen Stickstoffisothermen. Die Bestimmung der BET-Oberfläche erfolgt gemäß ASTM D6558-04, wobei in der vorliegenden Erfindung die MultiPoint-BET-Bestimmungsmethode (MP-BET) in einem Partialdruckbereich p/p₀ von 0,05 bis 0,1 angewendet wird.

In einer bevorzugten Ausführungsform des gemäß dem erfindungsgemäßen Verfahren erhältlichen, auf einem Träger präzipitierten Adsorbens weist die polymerbasierte kugelförmige Aktivkohle eine BET-Oberfläche im Bereich von 1.250 bis 2.000 m²/g auf.

In einer weiteren bevorzugten Ausführungsform des gemäß dem erfindungsgemäßen Verfahren erhältlichen, auf einem Träger präzipitierten Adsorbens weist die polymerbasierte kugelförmige Aktivkohle eine BET-Oberfläche im Bereich von 1.400 bis 1.900 m²/g auf.

In einer weiteren bevorzugten Ausführungsform des gemäß dem erfindungsgemäßen Verfahren erhältlichen, auf einem Träger präzipitierten Adsorbens weist die polymerbasierte kugelförmige Aktivkohle eine BET-Oberfläche im Bereich von 1.350 bis 1.750 m²/g auf.

In einer weiteren bevorzugten Ausführungsform des gemäß dem erfindungsgemäßen Verfahren erhältlichen, auf einem Träger präzipitierten Adsorbens ist die als Träger dienende polymerbasierte kugelförmige Aktivkohle ein oxidierter Träger, der durch
- thermische Oxidation, z.B. durch Einwirkung eines Sauerstoff enthaltenden Gases, wie z.B. Luft, oder
- chemische Oxidation, z.B. durch Einwirkung von Salpetersäure, Wasserstoffperoxid oder Ammoniumpyrosulfat oder von Ammoniumperoxodisulfat
auf den Träger erhalten wurde. Beim Einsatz eines oxidierten Trägers wird die Benetzbarkeit der Oberfläche der polymerbasierten kugelförmigen Aktivkohle erhöht, wodurch wiederum die Beladung des Trägers erhöht wird.

Hinsichtlich weiterer Eigenschaften und des Herstellungsverfahrens der im gemäß dem erfindungsgemäßen Verfahren erhältlichen, auf einem Träger präzipitierten Adsorbens eingesetzten kugelförmigen Aktivkohle wird auf EP 1 918 022 A1 und DE 101 91 656 B4 verwiesen.

Bei dem gemäß dem erfindungsgemäßen Verfahren erhältlichen, auf einem Träger präzipitierten Adsorbens ist das Adsorbens ein zur Adsorption von Cs⁺fähiges anorganisches Präzipitat und das anorganische Präzipitat ein komplexes Hexacyanoferrat(II) oder ein komplexes Hexacyanoferrat(III). Dabei bedeuten im Rahmen der vorliegenden Erfindung die Ausdrücke "komplexes Hexacyanoferrat(II) bzw. "komplexes Hexacyanoferrat(III)" anorganische Verbindungen, die [Fe^{II}(CN)₆] - Anionen bzw. [Fe^{III}(CN)₆] - Anionen und jeweils zwei unterschiedliche Kationen enthalten.

In einer besonders bevorzugten Ausführungsform des gemäß dem erfindungsgemäßen Verfahren erhältlichen, auf einem Träger präzipitierten Adsorbens enthält das komplexe Hexacyanoferrat(II) bzw. das komplexe Hexacyanoferrat(III)
(i) Hexacyanoferrat(II) bzw. Hexacyanoferrat(III) - Anionen,
(ii) NH₄⁺, Li⁺, Na⁺, K⁺ oder Rb⁺ und
(iii) ein zwei-, drei- oder vierwertiges Metallkation.

In einer ganz besonders bevorzugten Ausführungsformen des gemäß dem erfindungsgemäßen Verfahren erhältlichen, auf einem Träger präzipitiertes Adsorbens ist das zweiwertige Metallkation Cd²⁺, Co²⁺, Cu²⁺, Ni²⁺, Zn²⁺, Sn²⁺ oder Fe²⁺.

In einer weiteren ganz besonders bevorzugten Ausführungsform des gemäß dem erfindungsgemäßen Verfahren erhältlichen, auf einem Träger präzipitierten Adsorbens ist das dreiwertige Metallkation Cr³⁺ oder Fe³⁺.

In einer weiteren ganz besonders bevorzugten Ausführungsform des gemäß dem erfindungsgemäßen Verfahren erhältlichen, auf einem Träger präzipitierten Adsorbens ist das vierwertige Metallkation Sn⁴⁺, Ti⁴⁺ oder Zr⁴⁺.

In der bevorzugten Ausführungsform des gemäß dem erfindungsgemäßen Verfahren erhältlichen, auf einem Träger präzipitierten Adsorbens, worin das Adsorbens ein zur Adsorption von Cs⁺ fähiges anorganisches Präzipitat ist, und das anorganische Präzipitat ein komplexes Hexacyanoferrat(II) oder ein komplexes Hexacyanoferrat(III) ist, beträgt die Beladung des gemäß dem erfindungsgemäßen Verfahren erhältlichen, auf einem Träger präzipitierten Adsorbens mit komplexem Hexacyanoferrat(II) oder mit komplexem Hexacyanoferrat(III) vorzugsweise 0,1 Gew.% bis 35 Gew.%, noch bevorzugter 5 Gew.% bis 30 Gew.% und besonders bevorzugt 10 Gew.% bis 25 Gew.%, wobei sich die Gew.%-Angaben auf den unbeladenen Träger beziehen.

Die eingangs genannte Aufgabe wird ferner gelöst durch ein Verfahren zur Herstellung eines auf einem Träger präzipitierten Adsorbens, umfassend eine Präzipitation eines zur Cs⁺-Adsorption aus flüssigem Medium fähigen anorganischen Adsorbens auf einer als Träger dienenden polymerbasierten kugelförmigen Aktivkohle.

Gegenstand der vorliegenden Erfindung ist somit weiterhin ein Verfahren zur Herstellung eines auf einem Träger präzipitierten Adsorbens, umfassend eine Präzipitation eines zur Cs⁺-Adsorption aus flüssigem Medium fähigen anorganischen Adsorbens auf einer als Träger dienenden polymerbasierten kugelförmigen Aktivkohle,
wobei zur Herstellung der Aktivkohle ein synthetisches Polymer eingesetzt wird und wobei die Aktivkohle
- ein Gesamtporenvolumen nach Gurvich von mindestens 0,5 cm³/g, wobei mindestens 50 % des Gesamtporenvolumens durch Mikroporen mit einem Porendurchmesser von höchstens 20 Å gebildet sind,
- einen mittleren Porendurchmesser von höchstens 40 Å und
- eine BET-Oberfläche von mindestens 1.000 m²/g
aufweist,
wobei das Verfahren die folgenden Schritte umfasst:
a) Zurverfügungstellen der polymerbasierten kugelförmigen Aktivkohle als Träger,
   anschließend entweder b1) und c1)
b1) Imprägnieren des Trägers mit einer wässrigen Lösung, die
   (i) Hexacyanoferrat(II)- oder Hexacyanoferrat(III)- Anionen und
   (ii) NH₄⁺, Li⁺, Na⁺, K⁺ oder Rb⁺
   enthält,
c1) Versetzen des imprägnierten Trägers mit einer wässrigen Lösung eines Salzes eines zwei-, drei- oder vierwertigen Metallkations, wodurch das auf dem Träger präzipitierte anorganische Adsorbens in Gestalt eines komplexen Hexacyanoferrats(II) oder eines komplexen Hexacyanoferrats(III) erhalten wird,
   oder aber b2) und c2)
b2) Imprägnieren des Trägers mit einer wässrigen Lösung eines Salzes eines zwei-, drei- oder vierwertigen Metallkations,
c2) Versetzen des imprägnierten Trägers mit einer wässrigen Lösung, die
   (i) Hexacyanoferrat(II)- oder Hexacyanoferrat(III)-Anionen und
   (ii) NH₄⁺, Li⁺, Na⁺, K⁺ oder Rb⁺
      enthält, wodurch das auf dem Träger präzipitierte anorganisches Adsorbens in Gestalt eines komplexen Hexacyanoferrats(II) oder eines komplexen Hexacyanoferrats(III) erhalten wird,
   anschließend
d) Waschen des das präzipitierte Adsorbens enthaltenden Trägers und
e) gegebenenfalls Trocknen des das präzipitierte Adsorbens enthaltenden gewaschenen Trägers.

Eine bevorzugte Ausführungsform (A) des erfindungsgemäßen Verfahrens umfasst somit die Schritte
a) zur Verfügung stellen einer polymerbasierten kugelförmigen Aktivkohle als Träger,
b) Imprägnieren des Trägers mit einer wässrigen Lösung, die
   (i) Hexacyanoferrat(II) - oder Hexacyanoferrat(III) - Anionen und
   (ii) NH₄⁺, Li⁺, Na⁺, K⁺ oder Rb⁺ enthält,
c) Versetzen des imprägnierten Trägers mit einer wässrigen Lösung eines Salzes eines zwei-, drei- oder vierwertiges Metallkations, wodurch das auf dem Träger präzipitierte anorganische Adsorbens in Gestalt eines komplexen Hexacyanoferrats(II) oder eines komplexen Hexacyanoferrats(III) erhalten wird,
d) Waschen des das präzipitierte Adsorbens enthaltenden Trägers und
e) gegebenenfalls Trocknen des das präzipitierte Adsorbens enthaltenden gewaschenen Trägers.

In Schritt a) der bevorzugten Ausführungsform (A) des erfindungsgemäßen Verfahrens kann die polymerbasierte kugelförmige Aktivkohle in der Lieferform, d.h. trocken eingesetzt werden.

In Schritt b) der bevorzugten Ausführungsform (A) des erfindungsgemäßen Verfahrens liegt die Konzentration der dort eingesetzten wässrigen Lösung vorzugsweise im Bereich von 0,01 mol/l bis 0,8 mol/l, besonders bevorzugt im Bereich von 0,1 mol/l bis 0,5 mol/l.

In Schritt b) der bevorzugten Ausführungsform (A) des erfindungsgemäßen Verfahrens kann das Imprägnieren des Trägers mit der in Schritt b) eingesetzten Lösung beispielsweise erfolgen durch
- Tränken des Trägers mit einem Überschuss an Imprägnier-Lösung, wobei zumindest so viel an Imprägnierungslösung zugefügt wird, dass eine rührfähige Dispersion entsteht oder
- Tränken des Trägers mit der Imprägnier-Lösung bis zur beginnenden äußeren Benetzung des Trägers, oder
- Besprühen des Trägers mit der Imprägnier-Lösung zu Anfang.

In Schritt c) der bevorzugten Ausführungsform (A) des erfindungsgemäßen Verfahrens liegt die Konzentration der dort eingesetzten wässrigen Lösung vorzugsweise im Bereich von 0,01 mol/l bis 2 mol/l, besonders bevorzugt im Bereich von 0,2 mol/l bis 0,4 mol/l.

In Schritt c) der bevorzugten Ausführungsform (A) des erfindungsgemäßen Verfahrens kann das Versetzen des aus Schritt b) resultierenden imprägnierten Trägers mit der in Schritt c) eingesetzten Lösung durch Rühren oder Schütteln der den imprägnierten Träger enthaltenden Lösung erfolgen.

Ferner kann in Schritt c) der bevorzugten Ausführungsform (A) des erfindungsgemäßen Verfahrens das Versetzen des aus Schritt b) resultierenden imprägnierten Trägers mit der in Schritt c) eingesetzten Lösung beispielsweise erfolgen durch
- Tränken des imprägnierten Trägers mit einem Überschuss der in Schritt c) eingesetzten Lösung, wobei zumindest so viel an Imprägnierungslösung zugefügt wird, dass eine rührfähige Dispersion entsteht oder
- Tränken des imprägnierten Trägers mit der in Schritt c) eingesetzten Lösung bis zur beginnenden äußeren Benetzung des Trägers oder
- Besprühen des imprägnierten Trägers mit der in Schritt c) eingesetzten Lösung.

Ferner kann in Schritt c) der bevorzugten Ausführungsform (A) des erfindungsgemäßen Verfahrens das Versetzen des aus Schritt b) resultierenden imprägnierten Trägers mit der in Schritt c) eingesetzten Lösung bei erhöhter Temperatur, z.B. bei einer Temperatur im Bereich von 30 bis 100 °C durchgeführt werden, wobei die erhöhte Temperatur vorzugsweise für eine Zeit im Bereich von 2 bis 12 Stunden aufrechterhalten wird.

In Schritt d) der bevorzugten Ausführungsform (A) des erfindungsgemäßen Verfahrens erfolgt das Waschen des das präzipitierte Adsorbens enthaltenen Adsorbens vorzugsweise mit destilliertem Wasser.

In Schritt d) der bevorzugten Ausführungsform (A) des erfindungsgemäßen Verfahrens erfolgt das Waschen des das präzipitierte Adsorbens enthaltenen Adsorbens vorzugsweise so lange, bis entstandene Feinanteile des Präzipitats auf der äußeren Oberfläche der polymerbasierten kugelförmigen Aktivkohle entfernt wurden, d.h. bis das Waschwasser keine gravimetrisch bestimmbaren Feinanteile mehr enthält.

Der aus Schritt d) resultierende gewaschene Träger, der das präzipitierte Adsorbens enthält, kann ohne Trocknung zur Adsorption von Cs⁺, insbesondere von radiotoxischem ¹³⁷Cs⁺, verwendet werden.

In Schritt e) der bevorzugten Ausführungsform (A) des erfindungsgemäßen Verfahrens erfolgt das optionale Trocknen des das präzipitierte Adsorbens enthaltenden gewaschenen Trägers vorzugsweise an Luft bei einer Trocknungstemperatur, die vorzugsweise im Bereich von 90 °C bis 120 °C, und besonders bevorzugt im Bereich von 90 °C bis 110 °C liegt. Das in den Beispielen der vorliegenden Erfindung beschriebene Trocknen erfolgt, um den Beladungsgrad des Trägers bestimmen zu können.

Eine weitere bevorzugte Ausführungsform (B) des erfindungsgemäßen Verfahrens umfasst somit auch die Schritte
a) zur Verfügung stellen einer polymerbasierten kugelförmigen Aktivkohle als Träger,
b) Imprägnieren des Trägers mit einer wässrigen Lösung eines Salzes eines zwei-, drei- oder vierwertiges Metallkations,
c) Versetzen des imprägnierten Trägers mit einer wässrigen Lösung, die
   (i) Hexacyanoferrat(II) - oder Hexacyanoferrat(III) - Anionen und
   (ii) NH₄⁺, Li⁺, Na⁺, K⁺ oder Rb⁺ enthält, wodurch das auf dem Träger präzipitierte anorganische Adsorbens in Gestalt eines komplexen Hexacyanoferrats(II) oder eines komplexen Hexacyanoferrats(III) erhalten wird,
d) Waschen des das präzipitierte Adsorbens enthaltenden Trägers und f) gegebenenfalls Trocknen des das präzipitierte Adsorbens enthaltenden gewaschenen Trägers.

Ausführungsform (B) unterscheidet sich von Ausführungsform (A) lediglich in der Reihenfolge, in der die wässrige Lösung von Hexacyanoferrat(II) - oder Hexacyanoferrat(III) - Anionen und NH₄⁺, Li⁺, Na⁺, K⁺ oder Rb⁺ und die wässrige Lösung eines Salzes eines zwei-, drei- oder vierwertiges Metallkations eingesetzt werden. Daher gilt für die bevorzugten Parameterbereiche der Ausführungsform (B) sinngemäß das Gleiche, was bereits für Ausführungsform (A) beschrieben wurde.

In den o.g. bevorzugten Ausführungsformen (A) und (B) des erfindungsgemäßen Verfahrens bedeuten die Ausdrücke "komplexes Hexacyanoferrat(II)" und "komplexes Hexacyanoferrat(III)" sinngemäß das Gleiche, was bereits bei der Beschreibung des gemäß dem erfindungsgemäßen Verfahren erhältlichen, auf einem Träger präzipitierten Adsorbens erläutert wurde.

Mit beiden der o.g. bevorzugten Ausführungsformen (A) und (B) des erfindungsgemäßen Verfahrens ist es möglich, das anorganische Präzipitat nicht nur auf der Außenoberfläche, sondern auch auf der Oberfläche der Poren im Inneren der polymerbasierten kugelförmigen Aktivkohle in Form von nanoskaligen Kristalliten abzuscheiden. Die nanoskaligen Kristallite sind körnchenförmig auf der Außenoberfläche und auf der Poreninnenoberfläche der polymerbasierten kugelförmigen Aktivkohle angeordnet und weisen im Inneren des Trägermaterials einen Durchmesser auf, der maximal im Bereich der Porendurchmesser der polymerbasierten kugelförmigen Aktivkohle liegt.

Durch die in den bevorzugten Ausführungsformen (A) und (B) des erfindungsgemäßen Verfahrens beschriebenen Prozesse wird das anorganische Adsorbens in Gestalt eines komplexen Hexacyanoferrats(II) oder eines komplexen Hexacyanoferrats(III) elutionsstabil auf und im Träger aus polymerbasierter kugelförmiger Aktivkohle abgeschieden. Dabei bedeutet im Rahmen der vorliegenden Erfindung der Ausdruck "elutionsstabil abgeschieden", dass bei Umströmung der das komplexe Hexacyanoferrats(II), bzw. (III) enthaltenden polymerbasierten kugelförmigen Aktivkohle mit einer Lösung der zu adsorbierenden Cs⁺ - Ionen kein gravimetrisch messbarer Gewichtsverlust an komplexem Hexacyanoferrat(II) bzw. (III) auftritt.

Die elutionsstabile Abscheidung des komplexen Hexacyanoferrrats(II) bzw. (III) auf dem erfindungsgemäß eingesetzten Träger ist überraschend. Denn im Gegensatz zu einem Träger, dessen Oberfläche
- eine Vielzahl quaternärer Ammoniumgruppen, wie der eingangs in DE 40 21 046 A1 beschriebene Träger oder
- eine Vielzahl rein anorganischer Ionen, wie der eingangs in US 4,448,711 beschriebene Träger
aufweist, besitzt der im erfindungsgemäßen Verfahren eingesetzte Träger in seiner allgemeinsten Ausführungsform aus polymerbasierter kugelförmiger Aktivkohle keine der o.g. ionischen Gruppen und auch keinerlei sonstige chemische Funktionalitäten, die das auf der Oberfläche des Trägers präzipitierte komplexe Hexacyanoferrat(II) bzw. (III) mittels einer ionischen oder wie auch immer gearteten chemischen Bindung stabil auf und im Träger verankern könnten.

Mit dem erfindungsgemäßen Verfahren lässt sich die Beladung des gemäß dem erfindungsgemäßen Verfahren erhältlichen, auf einem Träger präzipitierten Adsorbens mit komplexem Hexacyanoferrat(II) oder mit komplexem Hexacyanoferrat(III) in weiten Grenzen einstellen, wobei vorzugsweise eine Beladung von 0,1 Gew.% bis 35 Gew.%, noch bevorzugter eine Beladung von 5 Gew.% bis 30 Gew.% und besonders bevorzugt eine Beladung 10 Gew.% bis 25 Gew.% eingestellt wird. Dabei beziehen sich die Gew.%-Angaben auf den unbeladenen Träger.

Ein weiterer Gegenstand der vorliegenden Erfindung ist die Verwendung des gemäß dem erfindungsgemäßen Verfahren erhältlichen, auf einem Träger präzipitierten Adsorbens zu Entfernung eines Metallkations oder einer Mischung von Metallkationen aus Wasser.

Eine bevorzugte Ausführungsform der erfindungsgemäßen Verwendung besteht in der Entfernung von radiotoxischen Metallkationen, wie ¹³⁷Cs⁺, ⁸³Ni²⁺, ⁹⁰Sr²⁺, ¹⁴⁰La³⁺, ⁶⁰Co²⁺ oder ⁸⁹Zr⁴⁺ aus mit den genannten radiotoxischen Metallkationen belastetem Wasser, welches eines oder mehrere der genannten radiotoxischen Metallkationen enthält.

Ein weiterer Gegenstand der vorliegenden Erfindung ist die Verwendung des aus dem erfindungsgemäßen Verfahren resultierenden auf einem Träger präzipitierten Adsorbens zur Entfernung von Cs⁺ aus Cs⁺ enthaltendem Wasser, insbesondere aus mit radiotoxischem ¹³⁷Cs⁺ belastetem Wasser.

Die Erfindung wird durch die folgenden Beispiele näher erläutert.

### Beispiel 1: Ausfällung von Zinkhexacyanoferrat(II) auf einer polymerbasierten kugelförmigen Aktivkohle

1000 g einer polymerbasierten kugelförmigen Aktivkohle mit einer Abriebfestigkeit von 99 %, einer BET-Oberfläche von 1938 m²/g, einem mittleren Porendurchmesser von 25 Å, und einem Gesamtporenvolumen nach Gurvich von 1,224 cm³/g werden mit 1,5 Liter einer Lösung von 0,8 M K₄[Fe(CN)₆]·3H₂O versetzt und 2 h lang auf einer Rüttelplatte geschüttelt. Anschließend wird die überschüssige K₄[Fe(CN)₆]·3H₂O-Lösung abdekantiert und die mit K₄[Fe(CN)₆]·3H₂O imprägnierte polymerbasierte kugelförmige Aktivkohle bei einer Temperatur von 110 °C 6 h lang getrocknet. Zur getrockneten mit K₄[Fe(CN)₆]·3H₂O imprägnierten polymerbasierten kugelförmigen Aktivkohle wird eine Lösung von 153 g Zn(NO₃)·6H₂O in 1,5 Liter dest. Wasser gegeben. Das erhaltene Gemisch wird unter Rückflussbedingungen bei einer Temperatur von 100 °C 4 h lang auf einer Rüttelplatte geschüttelt. Anschließend wird überschüssige Zn(NO₃)·6H₂O-Lösung abdekantiert, die mit Zinkhexacyanoferrat(II)-Präzipitat beladene polymerbasierte kugelförmige Aktivkohle in eine Fritte mit einer Nennweite der Poren von 100-160 µm (Port1-Frittte) überführt, mit 5 Liter dest. Wasser gewaschen und bei einer Temperatur von 110 °C 6 h lang getrocknet.

Die Beladung mit Zinkhexacyanoferrat(II)-Präzipitat beträgt 22 Gew.% bezogen auf den unbeladenen Träger.

### Beispiel 2: Ausfällung von Cobalthexacyanoferrat(II) auf einer polymerbasierten kugelförmigen Aktivkohle

Beispiel 2 wird wie Beispiel 1 ausgeführt, jedoch mit dem Unterschied, dass anstelle von Zn(NO₃)·6H₂OCo(NO₃)·6H₂O eingesetzt wird. Die Beladung mit Cobalthexacyanoferrat(II)-Präzipitat beträgt 19 Gew.% bezogen auf den unbeladenen Träger.

### Beispiel 3: Ausfällung von Nickelhexacyanoferrat(II) auf einer polymerbasierten kugelförmigen Aktivkohle

Beispiel 3 wird wie Beispiel 1 ausgeführt, jedoch mit dem Unterschied, dass anstelle von Zn(NO₃)·6H₂O Ni(NO₃)·6H₂O eingesetzt wird. Die Beladung mit Nickelhexacyanoferrat(II)-Präzipitat beträgt 13 Gew.% bezogen auf den unbeladenen Träger.

### Beispiel 4: Cs⁺-Adsorptionsversuch mit dem Adsorbens aus Beispiel 1

10 g der in Beispiel 1 erhaltenen mit Zinkhexacyanoferrat(II)-Präzipitat beladenen polymerbasierten kugelförmigen Aktivkohle werden durch Rühren mit 100 ml einer Lösung aufgeschlämmt, die 0,005 Gew.% Cs⁺ enthält. Das Cs⁺ wird als CsNO₃ eingesetzt. Aus der gerührten Aufschlämmung werden nach bestimmten Zeiten die jeweiligen Cs⁺-Restkonzentrationen in der Cs⁺ enthaltenden Lösung mittels Atomemisionsspectroskopie (ICP = Inductive Coupled Plasma) bestimmt.

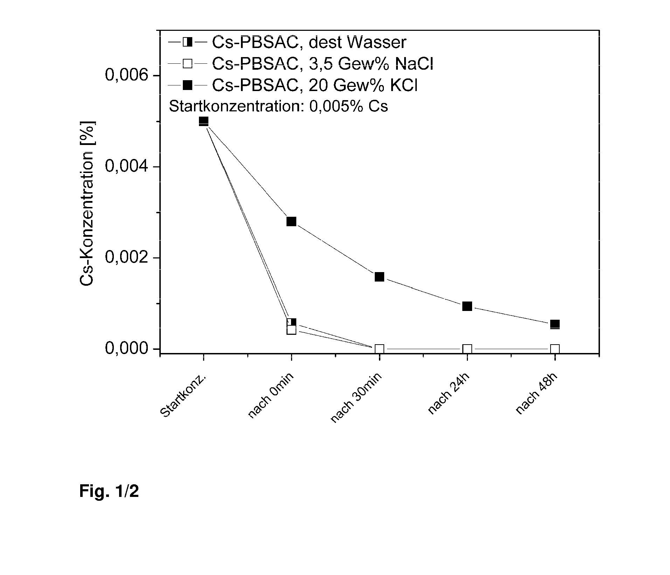

Die Ergebnisse des Adsorptionsversuchs sind in Fig. 1 dargestellt.

Fig. 1 zeigt die Cs⁺-Restkonzentration in
- dest. Wasser (schwarz/weiße Quadrate),
- dest. Wasser, das zusätzlich 3,5 Gew.% NaCl enthält (weiße Quadrate) und
- Wasser, das zusätzlich 20 Gew.% KCl enthält
   als Funktion der Adsorptionszeit in Minuten. Die Startkonzentration des Cs⁺ beträgt 0,005 Gew.%. "PBSAC" bedeutet "Polymer Based Surface Activated Carbon", womit das in Beispiel 1 hergestellte Adsorbens gemeint ist.

Fig. 1 zeigt, dass bereits nach 0 Minuten, d.h. sofort nach Beginn des Adsorptionsversuchs, die Cs⁺-Konzentration
- in dest. Wasser und in dest. Wasser, das zusätzlich 3,5 Gew.% NaCl enthält, auf ca. 1/10 und
- in dest. Wasser, das zusätzlich 20 Gew.% KCl enthält, auf ca. die Hälfte der Startkonzentration
sinkt.

Der weitere zeitliche Verlauf der Cs⁺-Konzentration in Fig. 1 macht deutlich, dass auch in der Cs⁺-Lösung, die zusätzlich 20 Gew.% KCl enthält, eine vollständige Entfernung des Cs⁺ aus dem Cs⁺-haltigen Wasser möglich ist.

### Beispiel 5: Cs⁺-Adsorptionsversuch mit dem Adsorbens aus Beispiel 3

Beispiel 5 wurde wie Beispiel 4 durchgeführt, jedoch mit den Unterschieden, dass das die mit Nickelhexacyanoferrat(II)-Präzipitat beladenen polymerbasierten kugelförmigen Aktivkohle aus Beispiel 3 verwendet wurde und die Startkonzentration des Cs⁺ 0,0045 Gew.% beträgt.

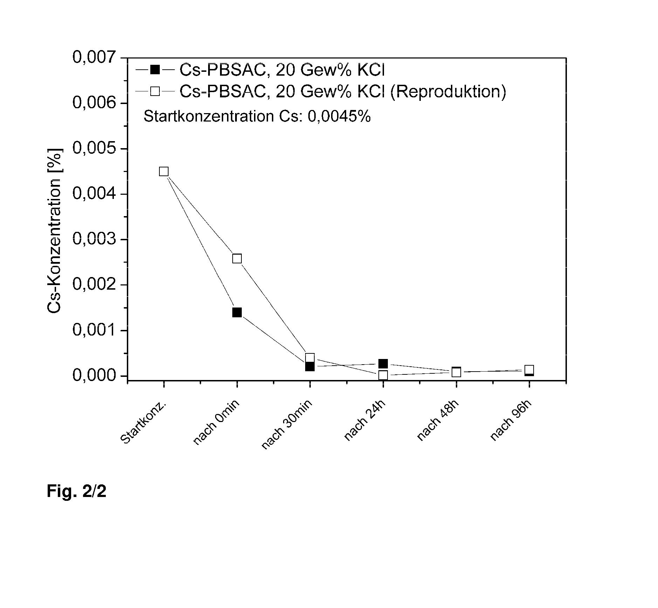

Die Ergebnisse des Adsorptionsversuchs sind in Fig. 2 dargestellt. In Fig. 2 zeigen die schwarzen Quadrate die Cs⁺-Konzentration in Wasser, das zusätzlich 20 Gew.% KCl enthält. In Fig. 2 stellen die weißen Quadrate die Cs⁺-Konzentrationen in Wasser eines Adsorptionsversuchs dar, der unter gleichen Bedingungen wie der zuvor beschriebene Versuch wiederholt wurde. Fig. 2 zeigt, dass die Cs⁺-Adsorption reproduziert werden kann.

## Patentansprüche

1. Verfahren zur Herstellung eines auf einem Träger präzipitierten Adsorbens, umfassend eine Präzipitation eines zur Cs⁺-Adsorption aus flüssigem Medium fähigen anorganischen Adsorbens auf einer als Träger dienenden polymerbasierten kugelförmigen Aktivkohle,
wobei zur Herstellung der Aktivkohle ein synthetisches Polymer eingesetzt wird und wobei die Aktivkohle
- ein Gesamtporenvolumen nach Gurvich von mindestens 0,5 cm³/g, wobei mindestens 50 % des Gesamtporenvolumens durch Mikroporen mit einem Porendurchmesser von höchstens 20 Å gebildet sind,
- einen mittleren Porendurchmesser von höchstens 40 Å und
- eine BET-Oberfläche von mindestens 1.000 m²/g
aufweist,
wobei das Verfahren die folgenden Schritte umfasst:
a) Zurverfügungstellen der polymerbasierten kugelförmigen Aktivkohle als Träger, anschließend entweder b1) und c1)
b1) Imprägnieren des Trägers mit einer wässrigen Lösung, die
(i) Hexacyanoferrat(II)- oder Hexacyanoferrat(III)- Anionen und
(ii) NH₄⁺, Li⁺, Na⁺, K⁺ oder Rb⁺
enthält,
c1) Versetzen des imprägnierten Trägers mit einer wässrigen Lösung eines Salzes eines zwei-, drei- oder vierwertigen Metallkations, wodurch das auf dem Träger präzipitierte anorganische Adsorbens in Gestalt eines komplexen Hexacyanoferrats(II) oder eines komplexen Hexacyanoferrats(III) erhalten wird,
oder aber b2) und c2)
b2) Imprägnieren des Trägers mit einer wässrigen Lösung eines Salzes eines zwei-, drei- oder vierwertigen Metallkations,
c2) Versetzen des imprägnierten Trägers mit einer wässrigen Lösung, die
(i) Hexacyanoferrat(II)- oder Hexacyanoferrat(III)-Anionen und
(ii) NH₄⁺, Li⁺, Na⁺, K⁺ oder Rb⁺
enthält, wodurch das auf dem Träger präzipitierte anorganische Adsorbens in Gestalt eines komplexen Hexacyanoferrats(II) oder eines komplexen Hexacyanoferrats(III) erhalten wird,
anschließend
d) Waschen des das präzipitierte Adsorbens enthaltenden Trägers und
e) gegebenenfalls Trocknen des das präzipitierte Adsorbens enthaltenden gewaschenen Trägers.

2. Verfahren nach Anspruch 1, **dadurch gekennzeichnet, dass** die polymerbasierte kugelförmige Aktivkohle eine poröse Aktivkohle ist, die Poren mit einem minimalen mittleren Porendurchmesser von mindestens 5 Å aufweist.

3. Verfahren nach Anspruch 1, **dadurch gekennzeichnet, dass** das zweiwertige Metallkation Cd²⁺, Co²⁺, Cu²⁺, Ni²⁺, Zn²⁺, Sn²⁺ oder Fe²⁺ ist.

4. Verfahren nach Anspruch 1, **dadurch gekennzeichnet, dass** das dreiwertige Metallkation Cr³⁺ oder Fe³⁺ ist.

5. Verfahren nach Anspruch 1, **dadurch gekennzeichnet, dass** das vierwertige Metallkation Sn⁴⁺, Ti⁴⁺ oder Zr⁴⁺ ist.

6. Auf einem Träger präzipitiertes Adsorbens, erhältlich durch ein Verfahren gemäß den Ansprüchen 1 bis 5.

7. Verwendung des auf einem Träger präzipitierten Adsorbens nach Anspruch 6 zur Entfernung eines Metallkations oder einer Mischung von Metallkationen aus Wasser.

8. Verwendung des aus dem Verfahren von Anspruch 1 resultierenden auf einem Träger präzipitierten Adsorbens zur Entfernung von Cs⁺ aus Cs⁺ enthaltendem Wasser.

## Claims

1. A method for the production of an adsorbent precipitated on a carrier, comprising a precipitation of an inorganic adsorbent capable of Cs⁺ adsorption from liquid medium, on polymer based spherical activated carbon serving as the carrier,
wherein a synthetic polymer is utilized for the production of the activated carbon, and wherein the activated carbon has
- a total pore volume according to Gurvich of at least 0.5 cm³/g, wherein at least 50% of the total pore volume are embodied by micropores having a pore diameter of not more than 20 Å,
- an average pore diameter of not more than 40 Å, and
- a BET surface of at least 1,000 m²/g,
the method comprising the following steps:
a) providing the polymer based spherical activated carbon as a carrier, subsequently either b1) and c1)
b1) impregnating the carrier with an aqueous solution, containing
(i) hexacyanoferrate(II) or hexacyanoferrate(III) anions, and
(ii) NH₄⁺, Li⁺, Na⁺, K⁺, or Rb⁺,
c1) adding to the impregnated carrier an aqueous solution of a salt of a bivalent, trivalent, or quadrivalent metal cation, by means of which the inorganic adsorbent precipitated on the carrier is retained in the form of a complex hexacyanoferrate(II) or of a complex hexacyanoferrate(III),
or b2) and c2)
b2) impregnating the carrier with an aqueous solution of a salt of a bivalent, trivalent, or quadrivalent metal cation,
c2) adding to the impregnated carrier an aqueous solution, containing
(i) hexacyanoferrate(II) or hexacyanoferrate(III) anions, and
(ii) NH₄⁺, Li⁺, Na⁺, K⁺, or Rb⁺,
by means of which the inorganic adsorbent precipitated on the carrier is retained in the form of a complex hexacyanoferrate(II) or of a complex hexacyanoferrate(III), subsequently
d) washing of the carrier comprising the precipitated adsorbent, and
e) optionally drying of the washed carrier comprising the precipitated adsorbent.

2. The method according to claim 1, **characterized in that** the polymer based spherical activated carbon is a porous activated carbon, comprising pores having a minimum average pore diameter of at least 5 Å.

3. The method according to claim 1, **characterized in that** the bivalent metal cation is Cd²⁺, Co²⁺, Cu²⁺, Ni²⁺, Zn²⁺, Sn²⁺, or Fe²⁺.

4. The method according to claim 1, **characterized in that** the trivalent metal cation is Cr³⁺ or Fe³⁺.

5. The method according to claim 1, **characterized in that** the quadrivalent metal cation is Sn⁴⁺, Ti⁴⁺, or Zr⁴⁺.

6. An adsorbent precipitated on a carrier, obtainable by means of a method according to claims 1 to 5.

7. A use of an adsorbent precipitated on a carrier according to claim 6 for removing a metal cation, or a mixture of metal cations from water.

8. The use the adsorbent precipitated on a carrier, resulting from the method according to claim 1, for removing Cs⁺ from water comprising Cs⁺.

## Revendications

1. Procédé de fabrication d'un adsorbant précipité sur un support, comprenant une précipitation d'un adsorbant inorganique capable d'adsorber le Cs⁺ à partir d'un milieu liquide, sur un charbon actif sphérique à base d'un polymère, servant de support,
un polymère synthétique étant utilisé pour la fabrication du charbon actif, et le charbon actif présentant
- un volume total des pores selon Gurvich d'au moins 0,5 cm³/g, au moins 50 % du volume total des pores étant formés par des micropores ayant un diamètre de pore d'au plus 20 Å,
- un diamètre moyen des pores d'au plus 40 Å, et
- une aire BET d'au moins 1000 m²/g,
le procédé comprenant les étapes suivantes :
a) mise à disposition du charbon actif sphérique à base d'un polymère, en tant que support, puis b1) ou c1) :
b1) imprégnation du support avec une solution aqueuse qui contient
(i) des anions hexacyanoferrate(II) ou hexacyanoferrate(III), et
(ii) NH₄⁺, Li⁺, Na⁺, K⁺ ou Rb⁺,
c1) addition, au support imprégné, d'une solution aqueuse d'un sel d'un cation d'un métal divalent, trivalent ou tétravalent, ce qui permet d'obtenir l'adsorbant inorganique, précipité sur le support, sous forme d'un hexacyanoferrate(II) complexe ou d'un hexacyanoferrate(III) complexe,
ou cependant soit b2) ou c2)
b2) imprégnation du support avec une solution aqueuse d'un sel d'un cation d'un métal divalent, trivalent ou tétravalent,
c2) addition au support imprégné d'une solution aqueuse qui contient
(i) des anions hexacyanoferrate(II) ou hexacyanoferrate(III), et
(ii) NH₄⁺, Li⁺, Na⁺, K⁺ ou Rb⁺,
ce qui permet d'obtenir l'adsorbant inorganique, précipité sur le support, sous forme d'un hexacyanoferrate(II) complexe ou d'un hexacyanoferrate(III) complexe,
puis
d) lavage du support contenant l'adsorbant précipité, et
e) éventuellement, séchage du support lavé, contenant l'adsorbant précipité.

2. Procédé selon la revendication 1, **caractérisé en ce que** le charbon actif sphérique à base d'un polymère est un charbon actif poreux qui comprend des pores ayant un diamètre moyen minimal de pore d'au moins 5 Å.

3. Procédé selon la revendication 1, **caractérisé en ce que** le cation d'un métal divalent est Cd²⁺, Co²⁺, Cu²⁺, Ni²⁺, Zn²⁺, Sn²⁺ ou Fe²⁺.

4. Procédé selon la revendication 1, **caractérisé en ce que** le cation d'un métal trivalent est Cr³⁺ ou Fe³⁺.

5. Procédé selon la revendication 1, **caractérisé en ce que** le cation d'un métal tétravalent est Sn⁴⁺, Ti⁴⁺ ou Zr⁴⁺.

6. Adsorbant précipité sur un support, pouvant être obtenu par un procédé selon les revendications 1 à 5.

7. Utilisation de l'adsorbant précipité sur un support selon la revendication 6 pour éliminer de l'eau un cation métallique ou un mélange de cations métalliques.

8. Utilisation de l'adsorbant précipité sur un support, obtenu par le procédé de la revendication 1, pour éliminer Cs⁺ d'une eau contenant Cs⁺.
